# EUROPÄISCHE PATENTSCHRIFT

(11) **EP 2 931 823 B1**
(45) Veröffentlichungstag und Bekanntmachung des Hinweises auf die Patenterteilung: **17.04.2019**
(21) Anmeldenummer: 13802062.3
(22) Anmeldetag: 10.12.2013
(51) Int. Cl.: C09J 4/06, C08F 18/08, C08F 2/44, C09J 123/08, C09J 131/00

(54) **VERFAHREN ZUM HERSTELLEN EINER POLYVINYLACETATDISPERSION**
METHOD FOR PRODUCING A POLYVINYL ACETATE DISPERSION
PROCÉDÉ DE FABRICATION D'UNE DISPERSION DE POLYACÉTATE DE VINYLE

(30) Priorität: 14.12.2012 DE 102012223211
(43) Veröffentlichungstag der Anmeldung: 21.10.2015
(73) Patentinhaber: Henkel AG & Co. KGaA, 40589 Düsseldorf (DE)
(72) Erfinder: SOMMER, Oliver, 40593 Düsseldorf (DE); WAGENBLAßT, Dagmar, 32457 Porta Westfalica (DE); WOLTER, Hans-Jürgen, 32469 Petershagen (DE); RANDALL-MEINEKER, Anke, 31711 Luhden (DE); GOSSEN, Ralf, 47239 Duisburg (DE); GOTTSTEIN, Werner, 73441 Bopfingen (DE); KOTTHOFF, Sebastian, 32457 Porta Westfalica (DE)
(86) Internationale Anmeldenummer: PCT/EP2013/076032
(87) Internationale Veröffentlichungsnummer: WO 2014/090775

(56) Entgegenhaltungen:
- EP-A1- 2 138 548
- WO-A1-2008/122297
- JP-A- H11 228 608
- US-A1- 2011 059 328
- US-B1- 6 730 718

## Beschreibung

Die Erfindung betrifft ein Verfahren zum Herstellen einer füllstoffhaltigen wässrigen Polymerdispersion, wobei Vinylestermonomere in Gegenwart eines speziellen Füllstoffs und eines ausgewählten Polyvinylalkohols als Schutzkolloid polymerisiert werden. Die Erfindung betrifft weiterhin eine so erhältliche Polyvinylacetatdispersion und ihre Verwendung als Klebstoff.

Die EP 1188775 A2 beschreibt ein Verfahren zum Herstellen wässriger Polyvinylesterharz-Dispersionen durch Emulsionspolymerisation von Vinylestermonomeren in Gegenwart von Polyvinylalkohol als Schutzkolloid und wasserunlöslichen Hydroxylgruppen-haltigen Verbindungen. Füllstoffe sind während der Polymerisation nicht zugegen.

Die EP 1493793 A1 beschreibt Dispersionen, die durch Polymerisation in Gegenwart von Polyvinylalkoholen hergestellt werden. Diese werden als Klebstoff eingesetzt. Sie enthalten keine Pigmente.

Die EP 2138548 A1 beschreibt eine wässrige Dispersion auf Basis von Vinylacetatcopolymeren, die in wässriger Lösung hergestellt werden. Diese werden in Gegenwart speziell ausgewählter Polyvinylalkohole hergestellt. Es wird dort auf die Schwierigkeiten hingewiesen, aus den so hergestellten Dispersionen wasserstabile Klebstoffschichten herzustellen. Es wird nicht beschrieben, die Polymerisation in Gegenwart spezieller Füllstoffe durchzuführen. Sofern Füllstoffe nötig sind, werden diese, wie üblich, den Dispersionen bei der Herstellung von Klebstoffformulierungen daraus zugegeben.

Die WO 2008/122297 A1 beschreibt eine wässrige Dispersion, die Pigmente und Füllstoffe enthält, als Emulgatoren Tenside und Polyvinylalkohol, wobei nur übliche Polyvinylalkohole (PVOH) eingesetzt werden. Es werden keine speziellen unpolaren Polyvinylalkohol-Derivate beschrieben. Weiterhin wird als Pigment insbesondere SiO₂ beschrieben.

In DE 102010039319 A1 werden Beschichtungsmittel auf Basis von einem oder mehreren mineralischen Bindemitteln, einem oder mehreren Polymeren, einem oder mehreren Füllstoffen und gegebenenfalls einem oder mehreren Additiven offenbart, wobei diese 2 bis 30 Gew.-% Kalk enthalten. Unter einer Vielzahl möglicher Additive sind Schichtsilikate und gegebenenfalls hydrophob modifizierte Polyvinylalkohole genannt. Es wird jedoch nicht erwähnt, spezielle Schichtsilikate und spezielle hydrophob modifizierte Polyvinylalkohole bei der Herstellung der Polymere zuzugeben.

Aus DE 102008043988 A1 sind faserhaltige Mörtelzusammensetzungen bekannt. Diese enthalten Bindemittel, Füllstoff, gegebenenfalls Additive, Fasern und Redispersionspulver. Wiederum sind unter einer Vielzahl möglicher Additive Schichtsilikate und gegebenenfalls hydrophob modifizierte Polyvinylalkohole genannt. Es wird jedoch nicht erwähnt, spezielle Schichtsilikate und spezielle hydrophob modifizierte Polyvinylalkohole bei der Herstellung der Polymere (Redispersionspulver) zuzugeben.

DE 19962568 A1 beschreibt Polyvinylalkohol-stabilisierte 1,3-Dien-(Meth)acrylsäureester-Mischpolymerisate. Diese werden durch Emulsionspolymerisation in Gegenwart eines Polyvinylalkohols als Schutzkolloid hergestellt. Die Gegenwart eines Füllstoffs bei der Polymerisation ist nicht vorgesehen. Füllstoffe können, wie auch sonstige gewünschte Additive, der Polymerdispersion nach deren Herstellung zugemischt werden.

In DE 10329594 A1 wird der Einsatz von Ethylen/Polyvinylalkohol-Copolymeren als Schutzkolloid bei der Herstellung von Polyvinylacetat-Dispersionen offenbart. Füllstoffe sind während der Polymerisation nicht zugegen.

JP H11 228608, WO 2008/122297, US 6 730 718, US 2011/059328 und EP 2 138 548 offenbaren noch weiter Verfahren zum Herstellen einer wässrige Klebstoffdispersion aus PVAc.

Es ist bekannt, dass Dispersionen, die mit Pigmenten und/oder Füllstoffen versetzt werden, weniger lagerstabil sind, da eine nachträgliche Dispergierung der Pigmente und/oder Füllstoffe in der Bindemitteldispersion schwierig ist. Da eine Reihe von Pigmenten gleichzeitig als Füllstoffe fungieren und viele anorganische Füllstoffe auch Pigmente sind, werden im Folgenden die Begriffe Pigment und Füllstoff synonym verwendet. Die Problematik der verringerten Lagerstabilität ist insbesondere auch dann gegeben, wenn in Gegenwart der Pigmente polymerisiert wird. Die Lagerstabilität solcher pigmentierter (füllstoffhaltiger) Dispersionen ist problematisch. Häufig bildet sich schnell ein Bodensatz aus ausgefallenen Pigmenten und Polymeren. Solche Dispersionen können nicht wieder aufgerührt werden, da die abgesetzten Substanzen miteinander verkleben und nicht erneut fein dispergiert werden können. Es ist weiter festgestellt worden, dass Füllstoffdispersionen aufgrund der Bildung von gelösten Metallionen nur wenig lagerstabile Dispersionen ergeben. Pigmente und/oder Füllstoffe in wässrigen Klebstoffen können aber prinzipiell anwendungstechnische Vorteile aufweisen. Sie können eine Sperrwirkung der Schicht hervorrufen, sie ändern das rheologische Fließverhalten, und sie können die Klebkraft einer Dispersion verändern. Deswegen sind unabhängig von den angegebenen Nachteilen füllstoffhaltige Dispersionen interessant.

Es hat sich häufig gezeigt, dass eine Verklebung mit wässrigen Polymerdispersionen unter feuchten Umgebungsbedingungen nicht stabil ist. Die EP 2138548 beschreibt ausführlich die Probleme, die bei Herstellung und Verklebung mit PVOH-Dispersionen auftreten können.

Aufgabe der vorliegenden Erfindung ist es deswegen, ein Verfahren zur Herstellung lagerstabiler, füllstoffhaltiger wässriger Polyvinylesterdispersionen und darauf basierender Klebstoffe zur Verfügung zu stellen. Die entstehenden Dispersionen und Klebstoffe sollen eine hohe Lagerfähigkeit aufweisen, eine geeignete Applikationsviskosität zeigen, und eine hoch belastbare Verklebung ergeben. Diese Verklebung soll auch in feuchter Umgebung stabil bleiben.

Die Erfindung gemäß Ansprüche 1 bis 7 betrifft ein Verfahren zur Herstellung einer wässrigen Klebstoffdispersion, wobei eine Dispersion von Füllstoffen und Schutzkolloiden hergestellt wird, und in Gegenwart dieser Mischung Vinylester und gegebenenfalls Comonomere polymerisiert werden, wobei als Schutzkolloid hydrophobe Ethylen/ Vinylalkohol-Copolymere eingesetzt werden und als Füllstoff Schichtsilikate eingesetzt werden, die SiO₂-Anteile enthalten.

Die Erfindung betrifft weiterhin eine wässrige Klebstoffdispersion gemäß Ansprüche 8 bis 11, die nach diesem Verfahren erhältlich ist, sowie die Verwendung der Dispersion gemäß Anspruch 12 als Klebstoff zur Verklebung von Holz.

Verfahren zum Herstellen von Dispersionen sind in unterschiedlichen Ausführungen bekannt. Beispielsweise werden dabei Tenside, Emulgatoren und andere Dispergierhilfsmittel in einer wässrigen Phase gelöst. In diese wird dann die Monomerzusammensetzung eingebracht und die Polymerisation durchgeführt. Gemäß dem erfindungsgemäßen Verfahren werden als Klebstoffbindemittel (Co)polymerisate aus Vinylestern und gegebenenfalls olefinisch ungesättigten Comonomeren hergestellt. Die Polymerisation zu diesen (Co)polymerisaten wird in Gegenwart spezieller dispergierter Füllstoffe durchgeführt. Insbesondere werden dabei nicht wasserlösliche (Co)polymere hergestellt, die durch radikalische Polymerisation von Vinylestern und gegebenenfalls olefinisch ungesättigten Comonomeren erhältlich sind.

Als Vinylester-Monomere zur Herstellung der Copolymere sind beispielsweise Ester des Vinylalkohols mit C2 bis C18 - Monocarbonsäuren, wie Vinylacetat, Vinylpropionat, Vinyl-n-butyrat, Vinyllaurat und Vinylstearat geeignet. Vorzugsweise kommt Vinylacetat zum Einsatz.

Als olefinisch ungesättigte Comonomere zur Herstellung der Copolymere sind radikalisch polymerisierbare Monomere geeignet, wie beispielsweise Ethylen; vinylaromatische Monomere, wie Styrol, α- Methylstyrol oder Vinyltoluol; Ester aus vorzugsweise 3 bis 6 C-Atome aufweisenden α,β-ungesättigten Mono- und Dicarbonsäuren, wie insbesondere Acrylsäure, Methacrylsäure, Maleinsäure, Fumarsäure und Itaconsäure mit C1 bis C12 -Alkanolen, wie Acrylsäure- und Methacrylsäuremethyl-, -ethyl-, -n-butyl-, -iso-butyl und -2- ethylhexylester, Maleinsäuredimethylester oder Maleinsäure-di-n- butylester oder Nitrile α,β-ungesättigter Carbonsäuren, wie Acrylnitril oder Mischungen davon.

Als bevorzugte (Co)polymere werden Polyvinylester von solchen olefinisch ungesättigten Monomeren eingesetzt, die durch Emulsions- oder Suspensionspolymerisation hergestellt werden können. Es handelt sich dabei beispielsweise um Vinylestermonomere aus linearen oder verzweigten C2 bis C12-Carbonsäuren. Geeignete Copolymere können insbesondere aus Vinylacetat und 0,1 bis 50 Mol-%, bezogen auf die Monomeren insgesamt, insbesondere 2 bis 20 Mol-% mindestens eines Mono- oder Di-Esters der Fumar-, Malein-, Itacon-, Croton-, Acryl- und/oder Methacrylsäure, wobei die Estergruppe verzweigt oder unverzweigt sein kann und 2 bis 18, insbesondere 4 bis 8 C-Atome enthalten soll, bestehen. Auch Terpolymere aus den oben angegebenen Comonomeren sind geeignet.

Es können gegebenenfalls auch in geringen Mengen Monomere enthalten sein, die mindestens eine weitere funktionelle Gruppe aufweisen, wie Epoxy-, Hydroxy-, Amin-, N-Methylol-Gruppen, oder eine weitere nicht konjugierte ethylenisch ungesättigte Doppelbindung. Die Menge solcher Monomere mit weiteren funktionellen Gruppen kann 0,1 bis 10 Mol-%, insbesondere 0,1 bis 5 Mol-% bezogen auf die Menge der Monomere betragen. Es können durch geringe Mengen an difunktionellen Monomeren gegebenenfalls auch verzweigte Polymere erhalten werden. Die Menge an polaren oder ionischen Gruppen enthaltenden Monomeren wird so gewählt, dass keine selbst wasserlöslichen Copolymere erhalten werden. Die Copolymere können aber zusätzlich Monomere mit funktionellen Gruppen aufweisen, die gegebenenfalls später nach der Applikation vernetzen können.

Ein weiterer notwendiger Bestandteil der erfindungsgemäß herstellbaren füllstoffhaltigen Polymerdispersion ist das Schutzkolloid, in dessen Gegenwart zusammen mit dem Füllstoff das nicht wasserlösliche Polymere polymerisiert wird.

Die erfindungsgemäße Zusammensetzung enthält mindestens ein hydrophobes Ethylen/Vinylalkohol Copolymeres als Schutzkolloid, beispielsweise einen hydrophoben Polyvinylalkohol. Unter hydrophoben Polyvinylalkoholen (PVOH) werden Polyvinylalkoholcopolymere verstanden, die zusätzlich Ethylenbausteine in der Polymerkette enthalten. Insbesondere kann der Ethylenanteil 0,2 bis 15 Mol-% betragen. Diese Copolymere sollen weitgehend hydrolysiert sein mit einem Hydrolysegrad über 95 %, so dass gleichzeitig hydrophobe und hydrophile Anteile in der Polymerkette vorliegen. Das Molekulargewicht der geeigneten hydrophoben PVOH-Derivate beträgt vorzugsweise über 30000 g/mol, insbesondere über 50000 g/mol (bestimmt über GPC gegen einen Polystyrolstandard). Solche Polymere sind kommerziell erhältlich.

Erfindungsgemäß ist es notwendig, dass 0,5 bis 15 Gew-%, insbesondere bis 5 Gew-% (bezogen auf das Gesamtgewicht der Dispersion), Schutzkolloid aus hydrophoben Polyvinylalkoholen in der Dispersion enthalten sind. Eine weitere Ausführungsform setzt eine Mischung aus hydrophobem Polyvinylalkohol ein zusammen mit üblichem vollhydrolysiertem Polyvinylalkohol. Dabei kann das Gewichtsverhältnis hydrophob : vollhydrolysiert 1: 5 bis 5 :1 betragen. Werden nur polare PVOH-Verbindungen eingesetzt, ist die Stabilität einer Verklebung gegen Wasser vermindert. Ist der hydrophobe Anteil zu hoch, ist die Herstellung einer Dispersion zusammen mit den Füllstoffen problematisch.

Es können zusätzlich weitere Schutzkolloide zugegeben werden. Es handelt sich dabei beispielsweise um Stärkeether und/oder Celluloseether oder deren Derivate, z.B. modifiziert durch Oxidation, Veresterung, Veretherung oder Abbau. Beispiele sind Hydroxyalkyletherstärken, Hydroxyalkylcellulosen, Carboxyalkylcellulosen, Carboxyalkyletherstärken, Dextrine oder Hydroxyalkyldextrine.

Ein weiterer Bestandteil, der der Dispersion erfindungsgemäß schon bei der Polymerisationsreaktion zugegeben wird, ist ein spezieller Füllstoff.

Unter Füllstoffen im Sinne der Erfindung werden Füllstoffe, Pigmente, unlösliche Farbstoffe oder auch feste, vernetzte, organische Polymerpulver verstanden. Als Füllstoffe eignen sich beispielsweise anorganische Stoffe, die gegenüber den Polymeren sowie während des Herstellungsprozesses der füllstoffhaltigen Polymerdispersion unter den dort herrschenden Reaktionsbedingungen inert sind. Beispiele für geeignete anorganische Materialien sind Kieselerde, Quarzmehl, Kieselgel, Bariumsulfat, Metalloxide wie Zinkoxid, Titandioxid, Zeolithe, Kaophilit, Leucit, die Gruppe der Soro-, Cyclo-, Ino-, Phyllo- und Tectosilikate. Weiterhin geeignet sind Verbindungen auf der Basis von Natriumaluminium- oder Calciumsilikaten. Ebenfalls geeignet sind Mineralien wie Aluminiumsilikate, beispielsweise Andalusit, Sillimanit, Kyanit, Mullit, Pyrophyllit, Imogolit oder bevorzugt Kaolinit. Wasserempfindliche oder lösliche Füllstoffe, wie Gips, Anhydrit sowie Calciummineralien wie Talkum oder Kreide sind weniger geeignet und sollen vermieden werden.

Weiterhin sind als Füllstoffe im Rahmen der vorliegenden Erfindung organische Füllstoffe in fester Partikelform geeignet, in deren Gegenwart die Polymerisation ablaufen kann. Geeignete organische Füllstoffe sind beispielsweise pulverförmig, wie Polyvinylacetat, Polystyrol, Polyolefine auf Basis von Ethylen, Propylen oder Buten; Polyacrylnitril, Poly(meth)acrylatester, Polydialkylmaleinate und deren Copolymere, als vernetzte oder hochmolekulare feste Substanzen. Es können einzelne Füllstoffe oder Gemische eingesetzt werden.

Dabei ist es erfindungsgemäß erforderlich, dass bei der Polymerisation als Füllstoff zumindest ein Schichtsilikat zugegen ist, das SiO₂-Anteile enthält. Insbesondere sind Aluminiumsilikate als Schichtsilikat geeignet. Ganz besonders bevorzugt weisen diese Füllstoffe an der Oberfläche OH-Gruppen auf. Ein Beispiel eines solchen OH-haltigen Schichtsilikats ist Kaolinit. Diese können in ihrer natürlichen Struktur anteilig bis zu 75 Gew-% SiO₂ als Quarz enthalten. Insbesondere handelt es sich um natürlich vorkommende Füllstoffe. Der Anteil solcher Schichtsilikate soll von 25 bis 100 Gew.-% bezogen auf die gesamte Füllstoffmenge betragen, bevorzugt von 60 bis 100 Gew.-%. Entsprechende Füllstoffe sind kommerziell erhältlich.

Die Füllstoffpartikel und insbesondere die geeigneten Schichtsilikate, sollen beispielsweise eine Partikelgröße (D₅₀-Wert) von etwa 0,1 bis etwa 10 µm, beispielsweise etwa 0,5 bis etwa 5 µm aufweisen. Dabei ist es bevorzugt, wenn mehr als 90 % der Teilchen eine Größe unter 10 µm aufweisen. Zur Klassifizierung der Partikelgröße wird im Rahmen der vorliegenden Erfindung auf die Größe der Primärpartikel abgestellt. Die Teilchengrößenmessung erfolgt durch Lichtbeugung; D₅₀-Wert ist der Wert, bei dem 50% der Partikel kleiner sind als der angegebene Durchmesser.

Die Menge der Füllstoffe, die beim erfindungsgemäßen Verfahren und in den dabei erhaltenen Dispersionen zugegen ist, beträgt vorzugsweise von 2,5 bis 75 Gew-%, bezogen auf das Gesamtgewicht der Dispersion, insbesondere 10 bis 40 Gew-%.

Je nach gewünschten Eigenschaften der Dispersion und der Art der Herstellung kann der Anteil der Polymeren an der gesamten Klebstoffdispersion zwischen 5 und 60 Gew.-% betragen. In einer bevorzugten Ausführungsform der Erfindung liegt der Anteil bei 10 bis 35 Gew.-%.

Die erfindungsgemäß erhältliche Dispersion kann weiterhin bis zu etwa 20 Gew.-%, bezogen auf das Gesamtgewicht der Dispersion, an Zusatzstoffen enthalten. Zu den Zusatzstoffen zählen beispielsweise Stabilisatoren, Entschäumer, Antioxidantien, Photostabilisatoren, Pigmentverteiler, Benetzungsmittel, pH-Regler, Haftvermittler, Weichmacher, Farbstoffe, Geruchsstoffe und Biozide. Diese können der Klebstoffdispersion vor oder nach der Polymerisation des Vinylesters und der Comonomere zugegeben werden, wobei eine Zugabe nach der Polymerisation bevorzugt ist.

Als Konservierungsmittel kann man vorteilhaft Benzoate, Fluoride wie Natriumfluorid, amidische Substanzen und Hydroxybenzoesäureester zufügen. Als weitere Zusatzstoffe kann die erfindungsgemäße Klebstoffdispersion bis zu 2 Gew.-%, vorzugsweise 0,1 bis 1 Gew.-% an UV-Stabilisatoren enthalten. Als UV-Stabilisatoren besonders geeignet sind die sogenannten HALS-Verbindungen. Beispielsweise kann die erfindungsgemäße Klebstoffdispersion noch Anteile von Weichmachern oder Klebrigharzen enthalten. Als Weichmacher geeignet sind beispielsweise Ester OH-Gruppen tragender oder epoxidierter Fettsäuren, Glykolsäureester, Phosphorsäureester, Phthalsäureester, Sebacinsäureester, Sulfonsäureester, Trimellithsäureester, Zitronensäureester, sowie Gemische davon. Als Klebrigharz geeignet sind beispielsweise Kohlenwasserstoffharze, wie Terpenharze, Cumaron-/Inden-Harze; aliphatische petrochemische Harze; Kohlenwasserstoffharze auf Basis ungesättigter CH-Verbindungen oder modifizierte Phenolharze oder Kolophoniumharze und -derivate. Als Haftvermittler sind insbesondere Silane geeignet, die hydrolysierbare Gruppen enthalten, wie Alkoxy- oder Acetoxysilane. Diese können auch zusätzlich funktionelle Alkylsubstituenten enthalten. Beispiele sind Alkylamino-, Hydroxyalkyl- oder Epoxyalkylsilane. Die Menge kann von 0,1 bis zu 3 Gew-% betragen.

In einer besonderen Ausführungsform enthält die Dispersion weniger als 0,5 Gew-% an anionischen, amphoteren oder kationischen Tensiden. Insbesondere ist die Dispersion frei von Tensiden. In einer weiteren bevorzugten Ausführungsform kann die Dispersionen 0 bis 5 Gew-%, insbesondere 0,3 bis 3 Gew-% einer sauren Metallverbindung enthalten, beispielsweise Aluminium-, Zink-, Chrom- oder Titanverbindungen, wie AlCl₃, Al(NO₃)₃, TiCl₄ oder ZnCl₂.

Alle Zusatzstoffe können unmittelbar vor der Polymerisation eingebracht werden, es ist jedoch auch möglich, diese nach der Herstellung der Polymer/Füllstoff-Dispersion zuzusetzen.

Eine bevorzugte Ausführungsform der erfindungsgemäß erhältlichen Dispersion enthält 0,5 bis 5 Gew-% Schutzkolloid aus hydrophobem Ethylen/Vinylalkohol-Copolymer, 10 bis 60 Gew-% Polyvinylacetat-Copolymer, 10 bis 40 Gew-% Schichtsilikat-Füllstoff, sowie 0,1 bis 10 Gew-% Additive. Insbesondere sind die oben erwähnten Additive, wie Haftvermittler, Katalysatoren und/oder Stabilisatoren enthalten. Dabei soll der Wassergehalt zwischen 35 und 65 Gew-% betragen und die Summe der Bestandteile 100 Gew-% betragen.

Die füllstoffhaltige Polymerdispersion wird im Rahmen der vorliegenden Erfindung durch Emulsionspolymerisation hergestellt. Zu diesem Zweck wird vorzugsweise zunächst eine Dispersion der Füllstoffpartikel in Wasser erzeugt. Dabei wird beispielsweise zunächst eine wässrige Lösung des hydrophoben Schutzkolloids hergestellt. Diese Lösung oder Dispersion wird dann homogenisiert, das kann auch durch Erwärmen unterstützt werden. Es ist zweckmäßig, wenn der pH-Wert der Dispersion zwischen 3, 0 und 7,0 beträgt.

Als nächster Verfahrenschritt wird die Dispersion der Füllstoffpartikel durchgeführt. Hierzu werden die Füllstoffpartikel in der oben genannten Dispersion verteilt, wobei die Dispersion so lange dispergiert wird, bis eine möglichst weitgehende Verteilung der vorliegenden Füllstoffagglomerate erzielt wird. Die Dispergierung kann durch schnelllaufende Rührer, wie Dissolver, durchgeführt werden. Gegebenenfalls kann die Zerteilung der Agglomerate durch Veränderung von Temperatur oder Rührgeschwindigkeit beeinflusst werden. Durch eine Messung der Partikelgrößenverteilung kann die vollständige Dispergierung überprüft werden. Es ist jedoch auch jede andere Form von Zerlegung der Füllstoffpartikel-Agglomerate in die Primärpartikel im Rahmen des erfindungsgemäßen Verfahrens möglich. Hierzu zählt beispielsweise die Zerteilung von Agglomeraten mittels Ultraschall oder mit einem Statik -Mischer.

Wenn eine ausreichende Dispergierung der Füllstoffpartikel vorliegt, so wird anschließend die Emulsionspolymerisation durchgeführt. Hierzu wird beispielsweise ein Teil der Monomere zugefügt, und nach Zugabe eines Teils geeigneter Initiatoren die Polymerisation durch Erwärmen gestartet. Unter Kontrolle der Reaktionstemperatur können dann die restlichen Anteile an Monomeren und Initiator zugetropft werden.

Als Polymerisationsinitiatoren für die bevorzugte radikalische wässrige Emulsionspolymerisation sind alle diejenigen geeignet, die in der Lage sind, eine radikalische wässrige Emulsionspolymerisation im Beisein des Füllstoffes auszulösen. Es kann sich dabei um an sich bekannte organische und anorganische Initiatoren handeln, wie organische oder anorganische Peroxide, Azoverbindungen oder geeignete Redoxinitiatoren. Beispielweise sind Wasserstoffperoxid, Natriumpersulfat, Kaliumpersulfat oder Ammoniumpersulfat in Mengen bis zu 2,0 Gew.-%, vorzugsweise in Mengen bis zu 0,2 Gew.-% geeignet. Solche Initiatoren sind dem Fachmann bekannt.

Um eine vollständige Reaktion zu erhalten und den Gehalt an Restmonomeren zu vermindern, kann in einer Ausführungsform nach dem Ende der Reaktion zusätzlich ein gegebenenfalls auch unterschiedlicher Initiator zugesetzt werden und durch erhöhte Temperatur noch eine Nachreaktion durchgeführt werden.

In die so hergestellte füllstoffhaltige Polymerdispersion können entweder nach dem Abkühlen oder in der Wärme weitere Zusatzstoffe zugefügt werden. Diese können zur Beeinflussung bestimmter Eigenschaften der fertigen Klebstoffdispersion ausgewählt werden. Wenn diese Zusatzstoffe nicht die Polymerisationsreaktion stören, können diese gegebenenfalls auch bereits zusammen mit dem Schutzkolloid und dem Füllstoff eingearbeitet werden.

Gemäß dem Herstellungsverfahren erhält man eine lagerstabile Dispersion, die, gegebenenfalls nach Zugabe weiterer Zusatzstoffe, als Klebstoff verwendet werden kann. Die erfindungsgemäßen Klebstoffdispersionen weisen vorzugsweise eine Viskosität unter 20000 mPas auf, insbesondere von 5000 bis 15000 mPas (ISO 2555, Brookfield RVT, Spindel 4 für Viskositäten bis 10000 mPas und Spindel 5 für Viskositäten größer 10000mPas, 25 °C). Diese Dispersion soll mindestens über einen Zeitraum von 8 Wochen lagerstabil sein, d. h. es sollen sich keine abgesetzten (Füllstoff)Partikel am Boden befinden. Dabei ist es auch möglich, zur Applikation die Dispersion mit Wasser oder Additiven in der Viskosität zu senken, beispielsweise auf 2000 bis 15000 mPas (25 °C), insbesondere auf unter 5000 mPas.

Der Vorteil der erfindungsgemäß erhältlichen Zusammensetzung ist in der erhöhten Stabilität einer Verklebung gegen Feuchtigkeit festzustellen. Dabei sind Probekörper längere Zeit in ihren mechanischen Eigenschaften stabil. Durch das erfindungsgemäße Verfahren können als Dispergierhilfsmittel auch unpolare Anteile aufweisende Polymere eingesetzt werden, die entstehenden füllstoffhaltigen Dispersionen sind dabei nicht selbstdispergierbar, aber trotzdem lagerstabil. Eine erhöhte Menge an polaren Hilfsmitteln kann dabei vermieden werden, diese würden zu einer Verschlechterung der Verklebungsstabilität führen.

### Beispiele:

Soweit nicht anders angegeben, beziehen sich sämtliche Prozentangaben auf gewichtsprozent.

In einem schnell laufenden Rührer wurde eine Pre-Emulsion unter Erwärmen auf 70 °C hergestellt aus:

| Beispiel1 | Beispiel 2 | |
|---|---|---|
| 40,0 g | 37,5 g | destilliertes Wasser |
| 1 g | 1 g | Polyvinylalkohol vollhydrolysiert (4 Gew.-%ige wässrige Lösung mit einer Viskosität von 5600 mPas) |
| 4,5 g | 3,5 g | Ethylen/PVOH-Copolymer (Molekulargewicht ca. 60000 g/mol, > 98 % verseift) |
| 0,02 g | 0,02 g | Entschäumer |

Es wurden danach zugesetzt und unter Rühren dispergiert:

| | | |
|---|---|---|
| 15 g | 0 | Kreide |
| 15 g | 30 g | Kaolinit (ca. 30% Schichtsilikat, 70 % Quarz, OH-Gruppenhaltig) |
| 0,1 g | 0,1 g | Weinsäure |
| 0,5 g | 1,5 g | destilliertes Wasser |

Nach dem Mischen wurden über einen Zeitraum von zwei Stunden bei einer Temperatur von ca. 75 - 80 °C Initiatorlösung und Monomermischung zugegeben:

| | | |
|---|---|---|
| 15 g | 15,5 g | Vinylacetat |
| 0 | 0,5 g | N-iso-butoxy-methylacrylamid |
| 5g | 5 g | Wasser, in dem 0,15 g H₂O₂ gelöst sind |

Nach 30 min. bei 80 °C wurden in einzelnen Stufen (jeweils nach 15 min.) unter Rühren zugemischt:

| | | |
|---|---|---|
| 0,5 g | 0,5 g | destilliertes Wasser mit 0,05 g tert. Butylhydroperoxid |
| 2,6 g | 1,6 g | Wasser mit 0,05 g Ascorbinsäure |
| 0,5 g | 0,5 g | Wasser mit 0,5 g H₂O₂ |

Nach weiteren 10 min wurde die Dispersion gekühlt. Anschließend wurde eine Stabilisatorlösung zugesetzt aus:

| | | |
|---|---|---|
| 0,15 g | 0,15 g | Acticid LA, verdünnt mit Wasser im Gewichtsverhältnis 1 : 1 (Biozid). |

Nach dem Abkühlen wurde der Ansatz filtriert.
Festkörper ca. 49 Gew.-%
Viskosität Versuch 1: 9500 mPas, 25°C
Viskosität Versuch 2: 8000 mPas, 25°C

In Beispiel 1 wurden 98,4 % der Dispersion 1 mit ca. 1,3 % eines Weichmachers (DIBP) zusammen mit 0,2 % eines Biozids zusammen mit etwas Wasser zu einem Klebstoff homogenisiert.

In Beispiel 2 wurden 89,4 % der Dispersion 2 mit ca. 2,5 % eines Weichmachers (Triacetin) zusammen mit 1,9 % AlCl₃, 1,8 % Wasser und 0,15 % Na(HCO₃)₂ versetzt. Es wurden 0,3 % eines Biozids zusammen mit ca. 4 % Wasser zugemischt und eine Klebstoffdispersion hergestellt.

Als Vergleichsversuch 3 wurde der Versuch 2 nachgearbeitet, mit der Maßgabe, dass das Ethylen/PVOH-Copolymer durch eine gleiche Menge teilverseiften PVOH (PVA 17-88) ersetzt wurde. Außerdem wurde als Füllstoff ausschließlich 20 g Kreide eingesetzt. Dieser Dispersion 3 wurden analog Beispiel 2 die Zusatzstoffe zugesetzt und als Beispiel 3 als Klebstoff getestet.
Viskosität: 12 000 mPas
Festkörper: ca. 48 %

Die Klebstoffe 1 - 3 wurden mehreren üblichen, vergleichenden Tests unterzogen.
- Massivholzverklebung Buche gegen Buche
- Abbindezeit bei Klebung HPL auf 18 mm Spanplatte und Hartholz auf Hartholz,
- Offene Zeit auf 18 mm Spanplatte und Hartholz,
- Wärmestandfestigkeit nach DIN 14257
- Wasserfestigkeit nach DIN EN 204/205 D3-Prüfung

Beschreibung der Prüfmethoden:
a) Vor der Klebung Buche gegen Buche wird das Holz gehobelt, bevorzugt direkt vor der Klebung, maximal 3 Stunden vor der Klebung. Der Klebstoff wird beidseitig auf die zu klebenden Flächen aufgetragen. Es ist darauf zu achten, dass die Jahresringe der zu klebenden Holzkanten ein Fischgrätenmuster, wie in DIN EN 204 beschrieben, zueinander haben. Die Klebstoffmenge beträgt 150 g/m². Nach 90 Sekunden werden die Holzkanten zusammengefügt und mittels Schraubzwingen fest miteinander verbunden. Innerhalb von 3 Minuten wird der Druck auf die Klebfuge mittels der Schraubzwingen langsam aufgebaut. Nach 24 Stunden werden die Schraubzwingen entfernt und nach weiteren 48 Stunden werden die verklebten Holzkanten plangehobelt. Direkt danach werden die Holzkanten mittels Stechbeitel in der Klebefuge auseinander geschlagen und der Holzbruch bzw. der Holzfaserbruch visuell beurteilt. Sehr gute Klebungen zeigen eine Holzbruch bzw. Holzfaserbruch von 90 - 100 Flächen-%, Noch akzeptable Klebungen haben eine Holzbruch bzw. Holzfaserbruch von über 50 Flächen-%.
b) Für die Bestimmung der Abbindezeit werden im Normklima gelagerte Materialien hergestellt:
   - Spanplatte der Größe 100 x 200 x 18 mm und HPL der Größe 130 x 25 x 1 mm
   - Bucheplatten der Größe 100 x 125 x 5 mm und Bucheholzstreifen 115 x 25 x x 3 mm

   Auf je eine Buchenholzplatte wird 150 g/m² Klebstoff mittels Drahtrakel aufgegeben und je 4 Buchenholzstreifen aufgelegt. Mittels einer hydraulischen Presse wird auf die Klebung ein Druck von 0,8 N/mm² aufgebracht. Die Pressung wird immer wieder kurzfristig zur Ermittlung der Abbindezeit unterbrochen, um einen Buchenholzstreifen von der Buchenholzplatte per Hand abzureißen. Hierbei wird der Holzfaserbruch bzw. der Holzbruch beurteilt. Die Abbindezeit ist erreicht, sobald eine mittlere Festigkeit mit einem Holzfaserbruch bzw. Holzbruch von 25 Flächen-% erreicht ist.
   Bei der Klebung HPL auf Spanplatte wird genauso wie oben beschrieben verfahren, der Klebstoffauftrag liegt aber bei 100 g/m² und 200 g/m². Somit ergeben sich für die Bestimmung der Abbindezeit insgesamt 3 Werte.
c) Für die Bestimmung der offenen Zeit werden im Normklima gelagerte Materialien eingesetzt. Die Abmessung der Holzwerkstoffe wird unter b) beschrieben. Als Klebstoffauftrag sowohl auf Spanplatte, wie auch Buchenholzplatte wird 100 g/m² und 150 g/m² gewählt. Die offene Zeit ist erreicht, wenn die Klebstoffanhaftung an den HPL-Streifen bzw. Bucheholzstreifen bei 15 bis 40 Flächen-%, bevorzugt 25 Flächen-%, liegt.
d) Prüfaufbau und Prüfung siehe DIN 14257
e) Prüfaufbau und Prüfung sieh DIN EN 204/205

**Ergebnisse:**

| Prüfung | Klebstoff 1 | Klebstoff 2 | Klebstoff 3 |
|---|---|---|---|
| Massivholzklebung (Flächen-%) | 90 - 100 | 70 - 90 | 40 - 60 |
| Abbindezeit Buche 150g/m² | 20 - 25 Min. | 20 - 25 Min. | 20 - 25 Min. |
| Abbindezeit Spanplatte 100 g/m² | 2 - 4 Min. | 3 - 5 Min. | 4 - 6 Min. |
| Abbindezeit Spanplatte 200 g/m² | 5 - 7 Min. | 7 - 10 Min. | 8 - 11 Min. |
| Offene Zeit Buche 100 g/m² | 4 - 5 Min. | 4 - 5 Min. | 6 - 7 Min. |
| Offene Zeit Buche 150 g/m² | 5 - 6 Min. | 5 - 6 Min. | 7 - 8 Min. |
| Offene Zeit Spanplatte 100 g/m² | 3 - 4 Min. | 3 - 4 Min. | 5 - 6 Min. |
| Offene Zeit Spanplatte 150 g/m² | 6 - 7 Min. | 6 - 7 Min. | 8 - 10 Min. |
| DIN 14257 | 9 - 10 N/mm² | 8 - 9 N/mm² | 3 - 5 N/mm² |
| DIN EN 204 Lagerungsfolge D3.3 | 2,2 - 2,5 N/mm² | 2,1 - 2,4 N/mm² | 1,6 - 1,8 N/mm² |

Es wurde weiterhin die Stabilität optisch beurteilt. Vergleich 3 zeigte erste Sedimentationen nach 7 Tagen Lagerung bei 25°C. Die anderen Proben waren nach 2 Wochen noch stabil. Die Verklebung des Vergleichsversuchs ist unmittelbar nach der Verklebung und auch nach Feuchtigkeitsbelastung geringer.

## Patentansprüche

1. Verfahren zum Herstellen einer wässrigen Klebstoffdispersion, wobei zunächst eine wässrige Dispersion von Füllstoffen und Schutzkolloiden hergestellt wird, und dieser Dispersion dann Vinylester und gegebenenfalls Comonomere zugesetzt und polymerisiert werden, **dadurch gekennzeichnet, dass** als Schutzkolloid mindestens ein hydrophobes Ethylen/ Polyvinylalkohol-Copolymer und als Füllstoff mindestens ein Schichtsilikat, enthaltend SiO₂-Anteile, eingesetzt werden.

2. Verfahren nach Anspruch 1, **dadurch gekennzeichnet, dass** als Schutzkolloid vollhydrolysiertes Ethylen-Polyvinylalkohol-Copolymer mit einem Ethylengehalt von bis 15 Mol-% eingesetzt wird.

3. Verfahren nach Anspruch 1 oder 2, **dadurch gekennzeichnet, dass** als Schutzkolloid eine Mischung mindestens eines hydrophoben Ethylen-Polyvinylalkohol-Copolymeren und mindestens eines vollhydrolysierten Polyvinylalkohols eingesetzt wird, insbesondere im Gewichtsverhältnis 1 : 5 bis 5 : 1.

4. Verfahren nach mindestens einem der Ansprüche 1 bis 3, **dadurch gekennzeichnet, dass** die dispergierten Schichtsilikate einen D₅₀-Wert, bestimmt mittels Lichtbeugung, unter 10 µm aufweisen.

5. Verfahren nach mindestens einem der Ansprüche 1 bis 4, **dadurch gekennzeichnet, dass** der SiO₂-Anteil des eingesetzten Schichtsilikats bis zu 75 Gew.-% beträgt.

6. Verfahren nach mindestens einem der Ansprüche 1 bis 5, **dadurch gekennzeichnet, dass** der Dispersion eine katalytisch wirkende saure Substanz zugesetzt wird, insbesondere Al, Zn, Ti-Verbindungen.

7. Verfahren nach mindestens einem der Ansprüche 1 bis 6, **dadurch gekennzeichnet, dass** das Copolymer funktionelle Gruppen aufweist, ausgewählt aus OH-, Epoxy-, Amin-, Methylol- Gruppen.

8. Klebstoffdispersion hergestellt nach einem Verfahren nach einem der Ansprüche 1 bis 7.

9. Klebstoffdispersion nach Anspruch 8, **dadurch gekennzeichnet, dass** die Klebstoffdispersion besteht aus i) 10 bis 40 Gew-% Füllstoffe, enthaltend mindestens ein Schichtsilikat, enthaltend einen SiO₂-Anteil, ii) 0,5 bis 5 Gew-% mindestens eines hydrophoben Ethylen-Polyvinylalkohol-Copolymeren, iii) 10 bis 60 Gew-% mindestens eines Vinylacetat -(Co)Polymeren, iv) Wasser, sowie v) 0,1 bis 10 Gew-% mindestens eines Additivs.

10. Klebstoffdispersion nach Anspruch 9, **dadurch gekennzeichnet, dass** die Klebstoffdispersion als Additiv bis zu 3 Gew-% einer sauren Metallverbindung enthält.

11. Klebstoffdispersion nach mindestens einem der Ansprüche 8 bis 10, **dadurch gekennzeichnet, dass** diese eine Viskosität von bis zu 20000 mPas aufweist, gemessen nach ISO 2555, Brookfield RVT, Spindel 4 für Viskositäten bis 10000 mPas und Spindel 5 für Viskositäten größer 10000mPas, 25 °C.

12. Verwendung einer Klebstoffdispersion nach mindestens einem der Ansprüche 8 bis 11 als Klebstoff zur Verklebung von Holz.

## Claims

1. A method for preparing an aqueous adhesive dispersion, an aqueous dispersion of fillers and protective colloids initially being prepared, and then vinyl ester and optionally comonomers being added to said dispersion and polymerized, **characterized in that** at least one hydrophobic ethylene-polyvinyl alcohol copolymer is used as the protective colloid and at least one phyllosilicate containing SiO₂ components is used as filler.

2. The method according to claim 1, **characterized in that** a fully hydrolyzed ethylene-polyvinyl alcohol copolymer having an ethylene content of up to 15 mol.% is used as the protective colloid.

3. The method according to claim 1 or 2, **characterized in that** a mixture of at least one hydrophobic ethylene-polyvinyl alcohol copolymer and at least one fully hydrolyzed polyvinyl alcohol is used as the protective colloid, in particular in a weight ratio of 1 : 5 to 5 : 1.

4. The method according to at least one of claims 1 to 3, **characterized in that** the dispersed phyllosilicates have a D₅₀ value, determined by means of light diffraction, of less than 10 µm.

5. The method according to at least one of claims 1 to 4, **characterized in that** the SiO₂ content of the phyllosilicate used is up to 75 wt.%.

6. The method according to at least one of claims 1 to 5, **characterized in that** a catalytically active acidic substance is added to the dispersion, in particular Al, Zn, Ti compounds.

7. The method according to at least one of claims 1 to 6, **characterized in that** the copolymer has functional groups selected from OH, epoxy, amine and methylol groups.

8. An adhesive dispersion prepared according to one of claims 1 to 7.

9. The adhesive dispersion according to claim 8, **characterized in that** the adhesive dispersion consists of i) from 10 to 40 wt.% of fillers containing at least one phyllosilicate containing a SiO₂ component, ii) from 0.5 to 5 wt.% of at least one hydrophobic ethylene-polyvinyl alcohol copolymer, iii) from 10 to 60 wt.% of at least one vinyl acetate-(co)polymer, iv) water, and v) 0.1 to 10 wt.% of at least one additive.

10. The adhesive dispersion according to claim 9, **characterized in that** the adhesive dispersion contains up to 3 wt.% of an acid metal compound as an additive.

11. The adhesive dispersion according to at least one of claims 8 to 10, **characterized in that** said dispersion has a viscosity of up to 20,000 mPas, measured according to ISO 2555, Brookfield RVT, spindle 4 for viscosities of up to 10,000 mPas and spindle 5 for viscosities greater than 10,000 mPas, 25 °C.

12. The use of an adhesive dispersion according to at least one of claims 8 to 11 as an adhesive for bonding wood.

## Revendications

1. Procédé de fabrication d'une dispersion aqueuse d'adhésif, dans lequel on fabrique tout d'abord une dispersion aqueuse de charges et de colloïdes protecteurs, et un ester de vinyle et, éventuellement, des comonomères sont ensuite ajoutés à cette dispersion et polymérisés, **caractérisé en ce qu'**on utilise, en tant que colloïde protecteur, au moins un copolymère hydrophobe d'éthylène/alcool polyvinylique, et, en tant que charge, au moins un silicate lamellaire contenant des fractions de SiO₂.

2. Procédé selon la revendication 1, **caractérisé en ce qu'**on utilise, en tant que colloïde protecteur, un copolymère totalement hydrolysé d'éthylène-alcool polyvinylique présentant une teneur en éthylène pouvant aller jusqu'à 15 % en moles.

3. Procédé selon la revendication 1 ou 2, **caractérisé en ce qu'**on utilise, en tant que colloïde protecteur, un mélange d'au moins un copolymère hydrophobe d'éthylène-alcool polyvinylique et au moins un alcool polyvinylique totalement hydrolysé, en particulier dans un rapport en poids situé dans la plage allant de 1:5 à 5:1.

4. Procédé selon au moins l'une des revendications 1 à 3, **caractérisé en ce que** les silicates lamellaires dispersés présentent une valeur D₅₀, déterminée par diffraction de la lumière, inférieure à 10 µm.

5. Procédé selon au moins l'une des revendications 1 à 4, **caractérisé en ce que** la proportion de SiO₂ du silicate lamellaire utilisé va jusqu'à 75 % en poids.

6. Procédé selon au moins l'une des revendications 1 à 5, **caractérisé en ce qu'**on ajoute à la dispersion une substance acide à action catalytique, en particulier des composés d'AI, de Zn, et de Ti.

7. Procédé selon au moins l'une des revendications 1 à 6, **caractérisé en ce que** le copolymère présente des groupes fonctionnels choisis parmi des groupes OH, époxy, amine et méthylol.

8. Dispersion d'adhésif fabriquée par un procédé selon l'une des revendications 1 à 7.

9. Dispersion d'adhésif selon la revendication 8, **caractérisée en ce que** la dispersion d'adhésif est constituée i) de 10 à 40 % en poids de charges, contenant au moins un silicate lamellaire, contenant une proportion de SiO₂, ii) de 0,5 à 5 % en poids d'au moins un copolymère hydrophobe d'éthylène-alcool polyvinylique, iii) de 10 à 60 % en poids d'au moins un (co)polymère d'acétate de vinyle, iv) de l'eau et v) de 0,1 à 10 % en poids d'au moins un additif.

10. Dispersion d'adhésif selon la revendication 9, **caractérisée en ce que** la dispersion d'adhésif contient, en tant qu'additif, jusqu'à 3 % en poids d'un composé métallique acide.

11. Dispersion d'adhésif selon au moins l'une des revendications 8 à 10, **caractérisée en ce qu'**elle présente une viscosité allant jusqu'à 20 000 mPa.s, mesurée selon la norme ISO 2555, Brookfield RVT, broche 4 pour les viscosités allant jusqu'à 10 000 mPa.s et broche 5 pour les viscosités supérieures à 10 000 mPa.s, à 25 °C.

12. Utilisation d'une dispersion d'adhésif selon au moins l'une des revendications 8 à 11 en tant qu'adhésif pour l'encollage du bois.
